**Europäisches Patentamt**

**European Patent Office**

**Office européen des brevets**

(19)

(11) **EP 1 162 449 A1**

(12) ## EUROPEAN PATENT APPLICATION

(43) Date of publication:
**12.12.2001 Bulletin 2001/50**

(51) Int Cl.[7]: **G01N 15/12**

(21) Application number: **00201979.2**

(22) Date of filing: **06.06.2000**

| (84) Designated Contracting States: **AT BE CH CY DE DK ES FI FR GB GR IE IT LI LU MC NL PT SE** Designated Extension States: **AL LT LV MK RO SI** (71) Applicant: **UNIVERSITEIT GENT** **9000 Gent (BE)** (72) Inventors: • **De Bisschop, Frank** **9840 De Pinte (Zevergem) (BE)** | • **Vandewege, Jan** **9030 Mariakerke (BE)** • **De Mets, Marc** **9052 Zwijnaarde (BE)** (74) Representative: **Bird, Ariane et al** **Bird Goen & Co,** **Vilvoordsebaan 92** **3020 Winksele (BE)** |
|---|---|

(54) **AC-based gate detection method and device for the sizing of colloidal particles, cells and bacteria in liquids**

(57)　An AC-based detection method and device, whereby an LF signal generator applies LF power in parallel to an active cell with a gate and a device matched in impedance to the active cell. The LF carrier signal applied to the active cell is modulated with a measurement signal when a particle to be measured passes through the gate. The outputs from the cell and the matched impedance device are fed to an AC common mode rejection device (32), thus generating a difference signal. The difference signal from the common mode rejection device is demodulated. The demodulated signal is filtered to remove components of the AC carrier signal and its harmonics to retrieve a signal relating to the size of the object passing through the gate of the active cell.

The output of the method and the device is similar to the results obtained with a DC detector but avoids the problem of electrolysis caused by the DC current in the active cell.

Fig. 7

**Description**

**TECHNICAL FIELD OF THE INVENTION**

The present invention relates to a new technique for the detection, counting and sizing of colloidal particles, cells and bacteria in liquids in a non-destructive and continuous manner. The technology is useful in environmental, pharmaceutical and biomedical applications. The present invention also relates to a discriminating circuit particularly suitable for use with the particle sizer and counter but also for independent applications.

**BACKGROUND OF THE INVENTION**

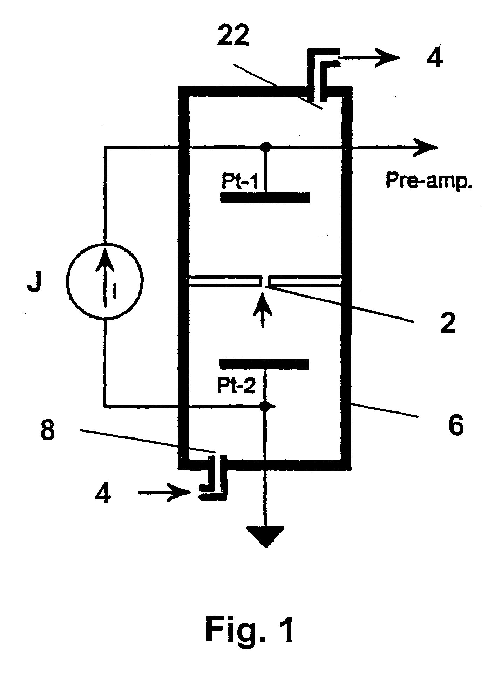

Electronic gating, a conductometric detection method, is widely used for the counting and sizing of colloidal particles, cells and bacteria in liquids. Instrumental and fully automated today, the method remains based on a classic principle: a conductive carrier liquid with the particles in suspension is passed through a narrow channel, the so-called gate 2, see Fig. 1, and the particles are counted by detecting a difference in electrical properties between the particles and the diluent in which they are suspended as the particles pass through the gate 2.

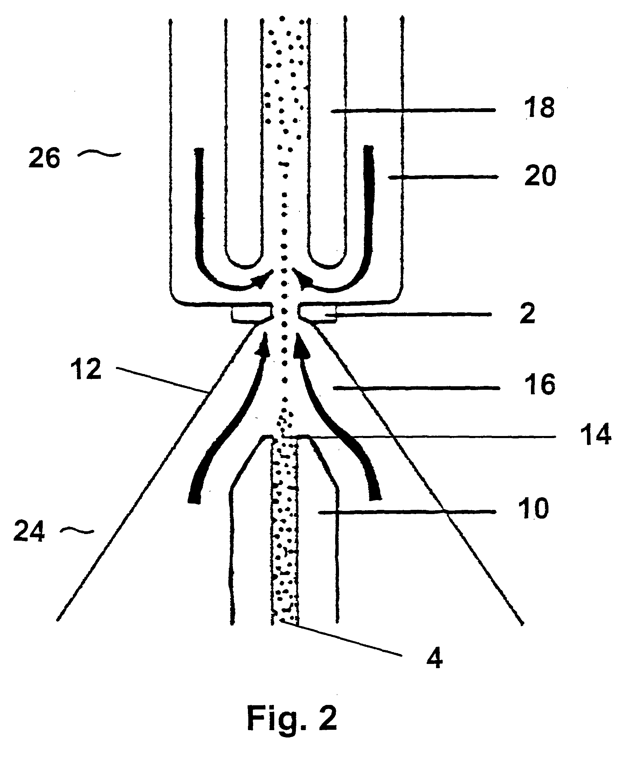

Typically, a diluted sample 4, consisting of a conductive carrier liquid and cells or particles to be counted and/or measured, is introduced into a measurement chamber 6 through an input opening 8. The measurement chamber 6 contains a gate 2, which is a small aperture, and electrodes Pt-1, Pt-2 on either side of the gate 2. These electrodes Pt-1, Pt-2 are electrically interconnected to either side of a direct current (DC) or high frequency AC current source J. Generally, as represented in Fig. 2, a sample tube 10 is mounted in front of the gate 2, and directed at its center. When diluted sample 4 enters the conical chamber 12 from the sample tube outlet 14, it is enveloped with a surrounding flow 16 of carrier liquid, which is a particle-free fluid, and passes through the central axis of the gate 2. After passing through the gate 2, the diluted sample 4 is directed into a catcher tube 18 by a back sheath flow 20. The diluted sample 4 then leaves the measurement chamber 6 through an output opening.

The reduced size and the axial symmetry of the input compartment 24 of the measurement chamber 24, along with the injection of carrier liquid 16, essentially contribute to convergent flow of column effluents, towards the gate 2. Convergent flow should prevent the circulation of particles inside the gates' sensing zone and the generation of false counts. The configuration of the output-compartment 26 of the measurement chamber with the catcher tube 18 and the introduced carrier liquid 20, eliminates recirculating cell flow and spurious pulses that could otherwise be generated in this region. The same configuration, adopted in both the input- and output-compartments 24, 26, minimizes the gate capacitance $C_g$ and the inherent signal loss. Size reduction and shaping of the compartments, fur such reasons, are necessary and inevitable.

By the focusing of the diluted sample 4, greater accuracy and resolution is obtained, since particles to be measured line up one after another in the direction of the flow.

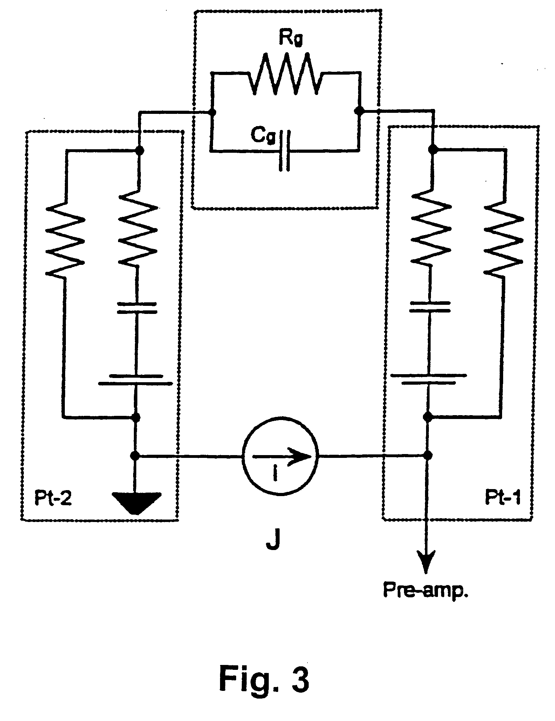

Fig. 3 shows an electrical equivalent scheme of the basic set-up of Fig. 1. A gate 2 is known to act as a resistance $R_g$ coupled in parallel to a capacitance $C_g$.

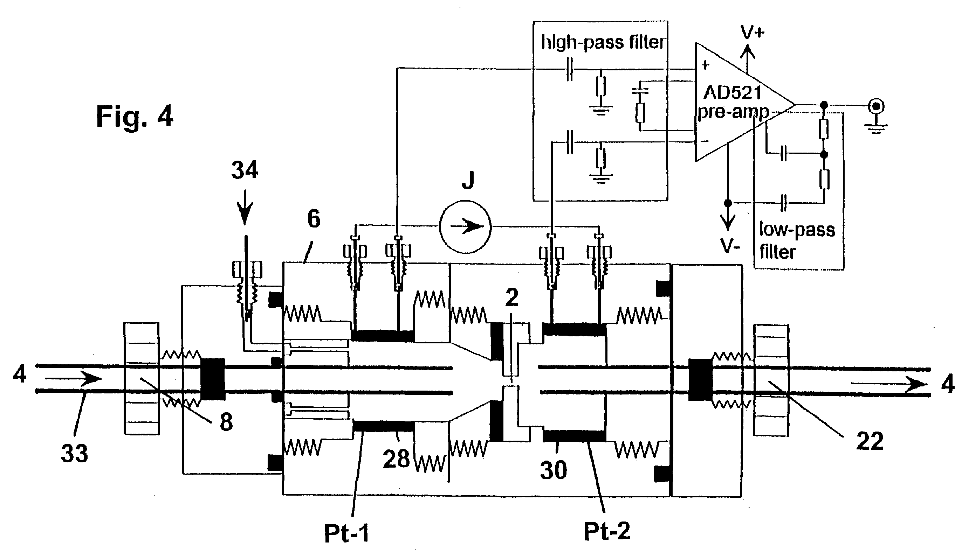

Transit of single particles through the gate 2 is signaled as a variation of the gate resistance $R_g$, which is proportional to the particles' size. In order to measure the variation of the gate resistance, signal sensing electrodes 28, 30 are provided before and after the gate 2 (with before and after seen in function of the direction of flow of the diluted sample 4), see Fig. 4. Preferably, the signal sensing electrodes 28, 30 are annular Platinum electrodes.

The low frequency or DC conductivity of a cell depends only on the volume of the cell provided the cell membrane is non-conducting. High frequency conductivity is determined by the cell interior. In practice cell impedance measurements are complicated by internal cell structure and non-spherical shape but the above simple model is still a useful guide. The boundary between what can be considered low and high frequency depends upon several factors but is typically around 1 MHz.

In case of a DC detection method, a DC current source J applies a DC current I through the gate 2. The signal sensing electrodes 28, 30 measure the potential difference over the gate 2. That way, the variation of the gate resistance is converted into pulsed voltage signals, measurable across the gate 2.

The small voltage changes measured across the gate 2 are amplified, converted into electrical signals and sent to a microprocessor. Pulse counting, in the absence of coincident gate transition, allows for almost exact particle counts. Particle sizing, finally, on the basis of pulse-height measurements, generally offers a resolution usually better than $10^{-7}$ m.

The voltage change in the DC detection method can be described as follows: V = R x I, where V is the voltage over the gate 2, I is the current through the gate 2 and R is the gate resistance $R_g$. Cells passing through the gate cause R to increase as they inhibit electron flow. If the current I is constant, any increase in R will cause an increase in V. Voltage V is proportional to resistance R, which is proportional to the cell volume.

Electronic gating using high frequency signals is also used, not for counting and sizing colloidal particles, but for detecting other properties, e.g. the kind of cell passing the gate, the plasma membrane capacitance, the cell nuclear volume.

The voltage change in the high frequency detection method may be described as follows: V = Z x I, where Z is the impedance of the gate 2, V is the voltage over the gate 2 and I is the current through the gate 2. Cells passing through the gate 2 cause Z to increase, as they inhibit electron flow. If the AC current I is constant, any increase in Z will cause an increase in V. The voltage V is proportional to the change in Z, which is not related directly to the size of the cell but is rather proportional to other characteristics such as the cytoplasmic granulation, the density and the size of the nucleus.

Particle measurements at high frequencies measure different properties of the particles than measurements at DC. Often a combined technology (DC and RF) is used in one detection unit, e.g. for measuring the electrical opacity of blood cells, which is defined as the ratio of the AC impedance to the DC resistance of the cell.

Gate detection under DC for counting and sizing particles, as such, offers unique characteristics of detection sensitivity, sizing resolution and counting accuracy. In spite of these, the technique, in its present state, remains unsuited for continuous operation, on-line, for the purposes, for example of capillary electrophoresis or chromatography. One reason is the necessarily small sized input- and output- compartments 24, 26 of the measurement chamber 6. Another reason is that the resistance-to-voltage conversion of the gate signal, when making use of direct current, causes electrolysis at the platinum electrodes and gives rise to the build-up of electrochemical half-cells. Electrolysis, producing gas bubbles, generates false counts and progressively deteriorates the signal-to-noise ratio. Detectors of his type, functioning with DC gate currents in the order of 1 mA, must be degassed, after a few minutes of operation. AC current must be supplied to the gate 2 to remove the protein build-up from the gate 2 and electrodes Pt-1, Pt-2 by electrolysis. After that, a clog removal operation must be performed e.g. by applying pressure to the measurement chamber 6. Such problems seriously hinder on-line gate detection.

The noise-power of gate detectors, starting from the DC level, drops continuously to reach the level of thermal noise, about 30 dB down, at frequencies of 500 kHz and higher. Measured with 50 μm and 100 μm gates, the figures show the coincidence, in the frequency domain, of the gate signal and dominant system noise. The noise-power spectra suggest a signal shift to higher frequencies as the most indicated measure to obtain improved signal-to-noise ratios. This measure, furthermore, would also eliminate the disturbing effects of electrolysis. However, the higher the frequency used, the more the cell or particle impedance decreases, the less the measurement of gate resistance values have any correlation with the cell volume as measured with the DC technique and hence the greater the loss in detection sensitivity is noted for measuring cell or particle volume.

The article entitled "Flow-system measurement of cell impedance properties", R. A. Hoffman and W. B. Britt, The Journal of Histochemistry and Cytochemistry, Vol. 27, No. 1, pp.234-240 (1979) describes a flow-system technique that detects the highfrequency resistance and capacitance changes in a gate due to the passage of cells through that gate. A Wheatstone bridge is used for sensing the voltage changes across the gate and the measuring cell is made into resonant circuit by a parallel inductor and an optional capacitance. Without flow of particles the bridge is balanced. The voltage measured over the gate is considered to be a carrier signal upon which a modulation is produced by changes in the gate impedance. When cells pass through the gate, they produce an asynchronous pulse modulation. This signal is demodulated into two components which are 90° out of phase, the two components representing the resistive and reactive components of the changing gate impedance. The bridge output is detected with a differential amplifier. The frequency used was 0.7 to 1.2 MHz. No method of protecting the demodulator during clogging of the gate is described. Due to the use of the gate in a resonant circuit accurate values of cell volume cannot be measured with this known device for, at the frequencies required (less than 1 MHz, particularly less than 600 kHz), the required bandwidth is not available. De-emphasis using an RC low-pass filter (-6dB per octave) is insufficient to remove the carrier from the final signal at frequencies below 1MHz. The carrier remains superimposed on the signal of interest. The carrier is much stronger than the gate signal to such an extent that the gate signal cannot be recovered. Due to insufficient bandwidth at frequencies below 1 MHz the rise time of the gate signals is seriously degraded. The signal shape cannot be restored by differentiation due to variation of the rise time with particle size. The signal amplitude, i. e. pulse height, changes with the flow rate (which affects residence time in the gate and the associated rise time of the signal).

US-4 791 355, US-4 535 284, US-4 525 666, US-4 298 836 and US-3 502 974 all describe measurement devices having both low frequency (DC) and high frequency signals applied to a gate (combined technology, for reasons as explained hereinabove).

For some of the measurement devices described, the gate has been incorporated in an LC resonant circuit, which results in a severe bandwidth limitation, to such an extent that amplitude-modulation becomes unfeasible. None of the systems described can handle short-time gate signals at working frequencies below 1 MHz). In the case of a 100 micron gate with a pressure drop of about 1.5 bar across the gate, the gate transition time is about 10 microseconds. The rise time is about 2 microseconds which means that the detection and amplifying systems must have a bandwidth of 330kHz. This bandwidth is difficult to achieve when the carrier frequency is below 1 MHz (i.e. of the same order as the bandwidth required).

It is therefore an object of the present invention to provide a method and a device for the counting and sizing cells, colloidal particles, bacteria and such like in liquids whereby the signal to noise ratio of the measurement is optimized and the effects of electrolysis are substantially eliminated.

It is a further object of the present invention to provide a method and a device for sizing of colloidal particles, cells and bacteria and such like in liquids, which can operate on-line in a noisy environment, e.g. a hospital, i.e. without electromagnetic shielding.

## SUMMARY OF THE INVENTION

The above objectives are accomplished by a detection method and device for the sizing of colloidal particles, cells and bacteria in liquids with improved detection sensitivity and sizing resolution. In accordance with the present invention an AC based gate detection for the sizing of colloidal particles, cells and bacteria in liquids is used, whereby an AC power signal is used with a frequency in the range 100 kHz to 1 MHz, preferably 100 to 600 kHz.

The detection method comprises the following steps:

applying an AC signal, with a frequency in the range 100 kHz to 1MHz, more preferably in the range 100 and 600 kHz in parallel to an active cell with a gate and a device matched in impedance to the active cell, this AC signal generating a non-resonant electrical signal at an output of the active cell as well as at an output of the matched impedance device,

sending at least one object to be measured through the gate of the active cell, this causing an electrical measurement pulse across the output of the active cell,

modulating the non-resonant AC electrical signal at the output of the active cell, with the electrical measurement pulse,

feeding the outputs from the cell and the matched impedance device to an AC common mode rejection device, thus generating a difference signal modulated with the non-resonant AC signal,

demodulating the difference signal from the common mode rejection device, and

filtering the demodulated signal to remove components of the AC signal and its harmonics to retrieve a signal relating to the volume of an object passing through the gate of the active cell. The common mode rejection device is preferably a Wheatstone bridge. The filtering step is preferably done with an elliptical filter.

A detection device for carrying out this method comprises:

an AC signal generator for generating an AC signal with a frequency between 100 kHz and 1MHz, more preferably in the range 100 to 600 kHz;

an active cell with a gate and a device matched in impedance to the active cell, the AC signal from the signal generator being applied to both cells in parallel to generate a non-resonant electrical signal at the output of the active cell and the matched impedance device. The matched impedance device may consist of resistors and capacitors, but it may also be a dummy cell device, being an active cell with a gate, through which no particles pass.

The detection device further comprises:

a modulator for modulating the signal applied to the active cell with a measurement pulse generated when a particle, cell or bacterium is detected in the gate of the active cell,

an AC common mode rejection device, to which the outputs from the active cell and the matched impedance device are fed, generating a difference signal. The common mode rejection device can be, e.g. a differential amplifier.

The detection device further comprises:

a demodulator for demodulating the difference signal; and

a filter for filtering the demodulated signal to remove components of the AC signal and its harmonics to retrieve a signal relating to the volume of an object passing through the gate of the active cell.

A device developed according to the present invention allows for:

- continuous measurements without disturbing effects of electrolysis, common to the current DC operated systems (for biomedical or clinical analysis, haematology)
- improved sensitivity, sizing resolution and signal-to-noise ratio

- non-destructive analysis of samples of biological nature (cell structures)
- can be used as a detector in measurements of the convective transport of cells in capillary tubings (cell chromatography)
- can be used as a monitor of bacterial contamination in food industry, drinking water distribution or similar.

The system, like the known DC-operated ones, measures the cell or particle volume despite the fact that it uses an AC source. A basic concept of the system is to keep the working frequency as low as possible, i.e. between 100 kHz and 1 MHz, more preferably between 100 and 600 kHz. That way, the decrease in cell or particle impedance at higher frequencies is avoided, as well as the inherent loss in detection sensitivity.

An active AC guarding circuit comprising at least one guard electrode for preventing current leaking to the earth from a signal electrode is preferably used, in order to reduce external electromagnetic influences so that the detection device can be operated without electromagnetic shielding. The guard electrode and the signal electrode are kept on the same potential, and furthermore a phase follower is used for keeping the signal electrode and the guard electrode in phase.

Other features and advantages of the present invention will become apparent from the following detailed description, taken in conjunction with the accompanying drawings, which illustrate, by way of example, the principles of the invention.

## BRIEF DESCRIPTION OF THE DRAWINGS

Fig. 1 shows the basic set-up of a gate-detection system according to the prior art.
Fig. 2 is a diagrammatic illustration of the sheath flow at the level of the gate, according to the prior art.
Fig. 3 is a symbol circuit diagram illustrating the equivalent electrical circuit of the gate-detection system of Fig. 1.
Fig. 4 is a set-up of a gate detection system according to the prior art.
Fig. 5A shows an AC-bridge with a gate detector incorporated, suitable for use with the present invention and Fig. 5B shows its Thevenin equivalent.
Fig. 6 is a set-up of a gate detection system with guard electrodes according to an embodiment of the present invention.
Fig. 7 is a schematic representation of a gate detection system according to an embodiment of the present invention.
Fig. 8 shows the demodulator output spectrum.
Fig. 9 illustrates a particular embodiment of a band-pass filter for use with a multiplier-demodulator.
Fig. 10 illustrates an embodiment of a phasing circuit.
Fig. 11 shows the frequency response of a ninth order band-pass filter used in combination with the multiplier-demodulator shown in Fig. 5.

Where objects or components in the different drawings bear the same reference numerals, these refer to items or components with similar functions.

## DESCRIPTION OF THE ILLUSTRATIVE EMBODIMENTS

The present invention will be described with reference to certain embodiments and drawings but the present invention is not limited thereto but only by the claims. In particular, the present invention will be described with reference to counting and sizing colloidal particles but the discriminating circuit and method may find wider and independent application.

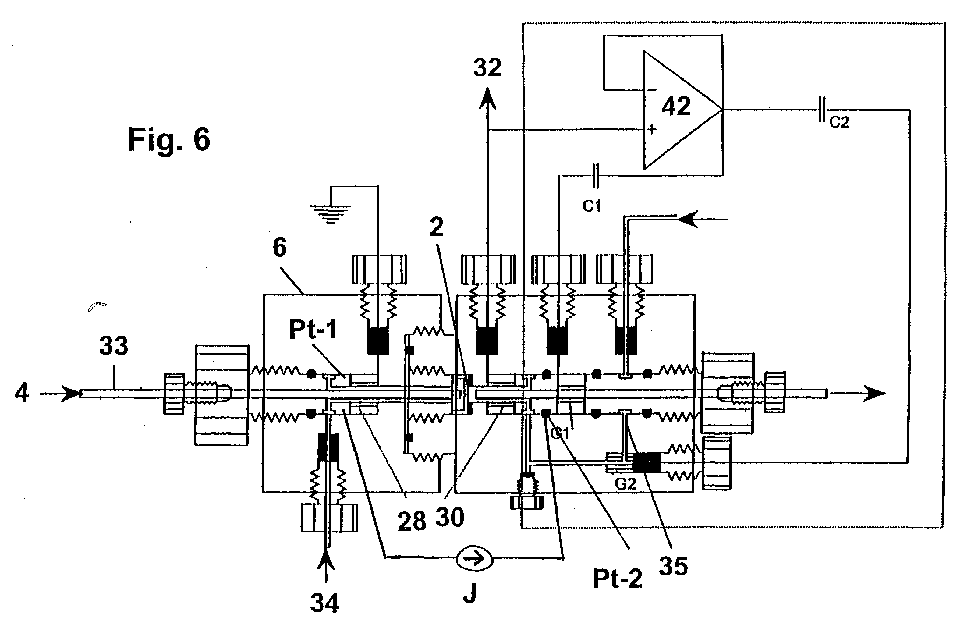

Turning now to the drawings and first to Fig. 6, the same illustrates in diagrammatic form the basics of a preferred embodiment of a measurement device according to the present invention.

A diluted sample 4, consisting of a conductive carrier liquid and cells or particles to be measured, is introduced via a capillary column 33 into a measurement chamber 6, containing a gate 2, and flows towards the gate 2. Further carrier liquid 34 is introduced in order to generate the front sheath reagent 16, for sending the particles lined-up through the gate 2.

Electrodes Pt-1, Pt-2 are provided on either side of the gate 2. Preferably, these electrodes Pt-1, Pt-2 are Platinum electrodes. These electrodes Pt-1, Pt-2 are electrically interconnected to either side of a low frequency AC current source J, having a frequency below 1 MHz, DC being excluded. The frequency is preferably in the range 100 kHz to 1MHz, more preferably in the range 100 to 600 kHz for measurements on cells, most preferably in the range 200 to 600 kHz. In the following the words "low frequency" represent a voltage in any of these ranges.

This current source J sends current I through the gate 2 via the conductive carrier liquid. Two signal sensing electrodes 28, 30 are applied, before and after the gate 2 (with before and after seen in function of the direction of flow of the carrier liquid), which measure the current I going through the gate 2. One of these signal sensing electrodes 28 is grounded, the other one is connected with a bridge 32. That way, the signal sensing electrodes 28 and 30 form the nodes A and D of the bridge 32 respectively.

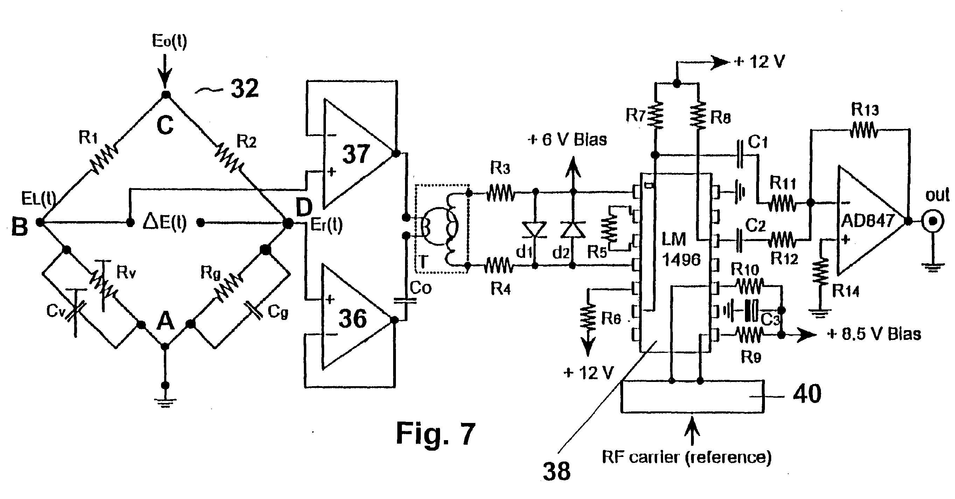

In order not to have any current leaking to the earth through the carrier liquid, and thus in order to eliminate external influences, guard electrodes $G_1$ and $G_2$ are introduced. Guard electrode $G_1$ is located in a compartment that is seperated from the one that holds the measuring electrodes 30 by a capillary of about 2cm length, while guard electrode $G_2$ is located at the carrier liquid tube 35 introducing carrier liquid for the back sheath flow 20. Both guard electrodes $G_1$ and $G_2$ are kept on the same potential as the second signal sensing electrode 30 by means of a voltage follower. Therefore, the signal measured at the second signal sensing electrode 30 is applied to the non-inverting input of an operational amplifier 42, and the output signal of the operational amplifier 42 is fed back to the inverting input. The output signal of the operational amplifier 42 will exactly follow the input signal, and this output signal is fed to both guard electrodes $G_1$ and $G_2$. The operational amplifier 42 used should be fast enough to reproduce the signal $E_r(t)$ measured over the gate 2 (see Fig. 7), with negligible phase lag. The AD847 supplied by Analog Devices, for example, which offers a unity gain bandwidth of 50 MHz and a slew rate of 300 V/μs, is suitable.

If only conductive carrier liquid, with no cells or particles in it, passes the gate 2, then a certain voltage is measured over the gate 2, between the signal sensing electrodes 28, 30 according to Ohms Law: V = Z x I, with V the voltage measured over the gate 2, Z the impedance of the liquid carrier and I the current from the current source J.

As a particle to be measured passes through the gate 2, where a low frequency AC current flows between the electrodes Pt-1, Pt-2, it causes changes in impedance between the electrodes Pt-1, Pt-2. As there are large differences between conductivity or resistance of the cells or particles and the carrier liquid, when a cell or particle passes through the gate 2, the impedance increases causing a change in voltage between the signal sensing electrodes 28, 30, which change in voltage is proportional to the resistance change. The volume of the cell or particle passing through the gate 2 is proportional to this voltage change. The mathematical expression of this occurrence is from Ohm's law: V = I x Z. If the current I flowing between the electrodes Pt-1, Pt-2 remains fixed, the voltage V over the gate 2 changes in accordance with the impedance Z of the gate 2. Thus, the voltage V is different depending on the cell volume, so the cell volume information can be obtained by taking the voltage as a pulse.

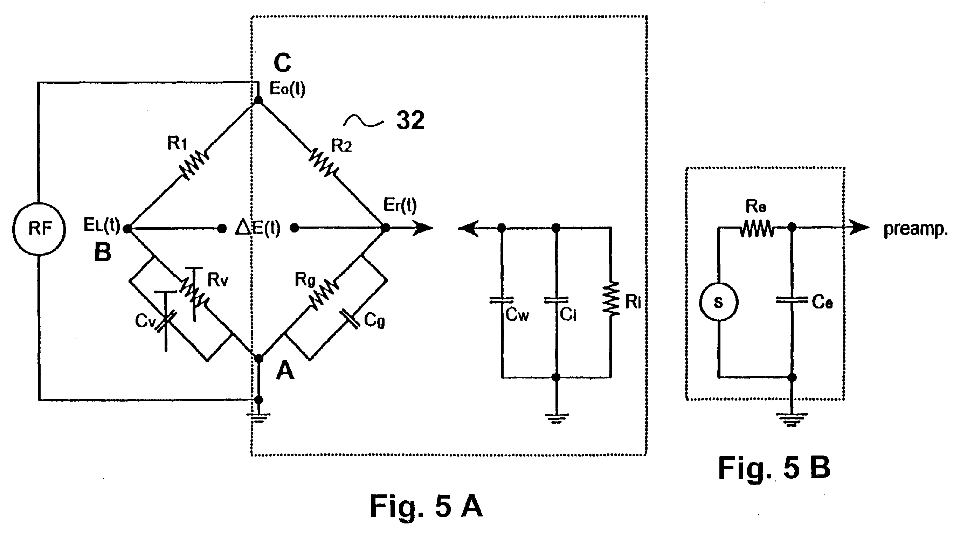

If the detector is incorporated in an AC bridge (Figs. 5 and 7), it signals particle transition as variation of its resistive and reactive impedance. Voltage division, by the bridge 32, converts such variations into amplitude- and phase modulation of the LF carrier signal applied. The gate 2, part of the AC-bridge 32, appears to function as a capacitor bypassed signal source S, with equivalent source resistance $R_e$ and equivalent load capacitance $C_e$, as can also be seen in the equivalent network of the gate 2, represented in Fig. 5B. This simplification is due to the fact that the electrode impedance drops to negligible values at radio frequencies. $C_w$, $C_i$ and $R_i$ in Fig. 5A are respectively the wiring capacitance, the amplifier input capacitance and the amplifier input resistance, the amplifier being used for pre-amplification of the gate signal measured with help of the bridge.

The elements of the bridge 32 are adjusted such that, when only carrier liquid is passing through the gate 2, the bridge 32 is in equilibrium, and no current is going from node B to node D. More particularly, $R_1$, $R_2$, and $R_v$, are preferably equal to the gate resistance $R_g$, in order to have optimum sensitivity. For example $R_v$ might be a 10 kΩ potentiometer and $C_v$ a 25 pF variable capacitor, in order to adjust the bridge 32 to equilibrium. $C_g$ is the gate capacitance.

When a cell or particle passes through the gate 2, the bridge 32 is out of equilibrium, and a voltage $\Delta E(t)$ is measured between node B and node D.

When the bridge 32 is balanced, the signals at nodes B and D are equal. Both signals are led to a differential amplifier and the differential amplifier output is only the transient change at node D due to a transient change in the gate impedance. One can think of the voltage at node D as a carrier signal upon which a modulation is produced by changes in the gate impedance.

The double side-band modulation, as it is occurring in the bridge circuit, essentially takes place by multiplication according to:

$$A_c \cos\omega_c t \cdot A_s \cos\omega_s t = (A_c A_s/2) \cdot [\cos(\omega_c - \omega_s)t + \cos(\omega_c + \omega_s)t]$$

where $A_c \cos\omega_c t$ and $A_s \cos\omega_s t$ represent the carrier and the modulating signal.

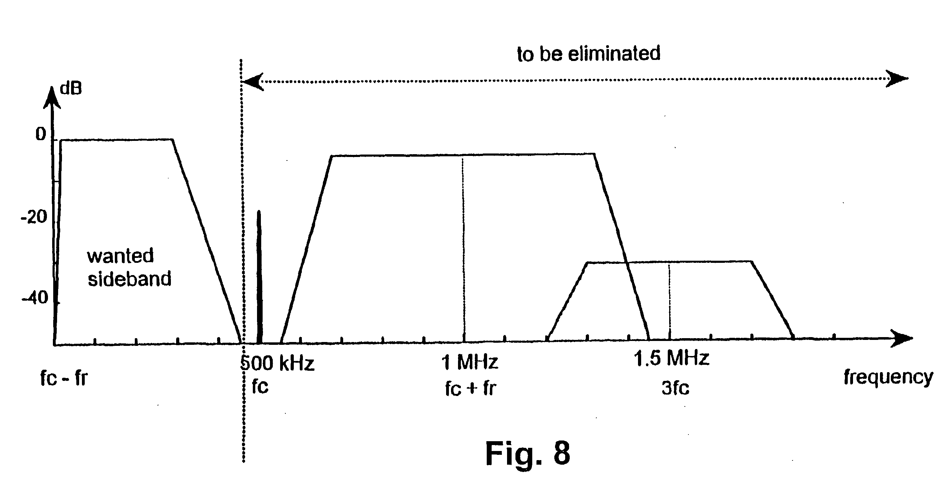

The modulation process, for a single-frequency modulating signal, gives rise to sum- and difference frequencies centered about the carrier frequency. Non-repetitive signals, occupying a wide range of frequencies, produce sidebands (Fig. 8). In Fig. 8 a demodulator output spectrum is represented with $f_r$ the frequency of the reference signal (e.g. 500 kHz), $f_c$ the frequency of the carrier signal (500 kHz), and $2f_c$, $3f_c$ harmonics with their own side bands, products of modulation. The carrier signal, which theoretically disappears, is in practice severely suppressed.

Modulation of the carrier $E_o \sin\omega_c t$ by the varying gate impedance $Z_g(t)$, is effectuated presently by voltage division (Fig. 7), according to:

$$E_r(t) = E_o \sin\omega_c t. \, Z_g(t) / (R_2 + Z_g)$$

with variations of $E_r(t)$ caused by small changes of $Z_g(t)$ responding to:

$$dE_r = E_o \sin\omega_c t. \, R_2 \, dZ_g / (R_2 + Z_g)^2$$

The quantity $dE_r$ represents the difference signal measurable across the bridge 32, at least when the bridge is operated in conditions of perfect equilibrium. The difference signal, in normal conditions, also contains a component of carrier frequency due to inevitable de-equilibration of the bridge 32. The latter is a consequence, mainly, of changing room temperatures. It may also be symptomatic of slow clogging. The concerned term is represented hereafter as $\delta \, E_o \sin\omega_c t$, so that a more general representation of the difference signal could read:

$$dE_r = E_o \sin\omega_c t. \, [R_2 \, dZ_g / (R_2 + Z_g)^2 + \delta]$$

The presence of the carrier, as it is shown hereinafter, has no further impact on the gate signal. The modulation scheme, however, should be adapted as follows for taking the presence of the carrier frequency into account:

$$A_c \cos\omega_c t. \, (A_s \cos\omega_s t + \delta) = (A_c \, A_s / 2). \, [\cos(\omega_c - \omega_s)t + \cos(\omega_c + \omega_s)t] + \delta \, A_c \cos\omega_c t.$$

The carrier component $\delta \, A_c \cos\omega_c t$, most frequently, is of the same order of magnitude as the side-band signals. Much higher amplitudes, however, occur in situations of severe clogging, with signals of amplitude $E_o/2$ transmitted to the difference amplifier and to the demodulator.

With $E_L(t)$ and $E_r(t)$ being in phase, the bridge 32 trimmed to equilibrium operates with almost disappearance of the LF carrier signal. Demodulation, however, is preferably not done at this stage since a true difference signal, at the occurring frequencies, is not readily available. An embodiment of the present invention includes the use of a differential pre-amplifier having signal followers 36, 37 to drive a broadband torroidal transformer T so that the difference signal only is passed to the demodulator 38. The transformer T acts as a common mode rejection device. The transformer T preferably has a low-loss ferrite core, e.g. an Amidon FT-50-77. A turn ratio of 1/80 is suitable with a single primary winding. The signal followers 36, 37 can be operational amplifiers of any type, provided the unity gain bandwidth is 10 MHz or higher. For example two operational amplifiers AD847 supplied by Analog Devices may be used. The output signal from each operational amplifier is fed back to the inverting input. The voltage gain is unitary but the power and current gain is appreciable which is necessary to drive the torroidal transformer T. The followers have a high input impedance which reduces the load in the bridge.

Diodes $d_1$ and $d_2$ (such as IN914 or IN4148) protect the demodulator input in the inevitable cases of clogging (when signals with an amplitude of the order of $E_o/2$ are transmitted to the differential amplifier). Demodulation may be performed, preferably, by synchronous multiplication with the bridge input signal $E_o(t)$ as a reference, followed by band-pass filtering.

The reference-signal, hereafter represented as $R \cos\omega_c t$, is equal to the carrier signal in frequency and in phase. The operation of demodulation, for a single-frequency-modulated carrier, responds to the following scheme:

$$[(\delta + A_s \cos\omega_s t). \, A_c \cos\omega_c t]. \, R \cos\omega_c t =$$

$$(R \, A_c A_s / 2) \cos\omega_s t + (R \, A_c A_s / 2) \cos\omega_s t \cos 2\omega_c t + R \, \delta \, A_c \, (1 + \cos 2\omega_c t)$$

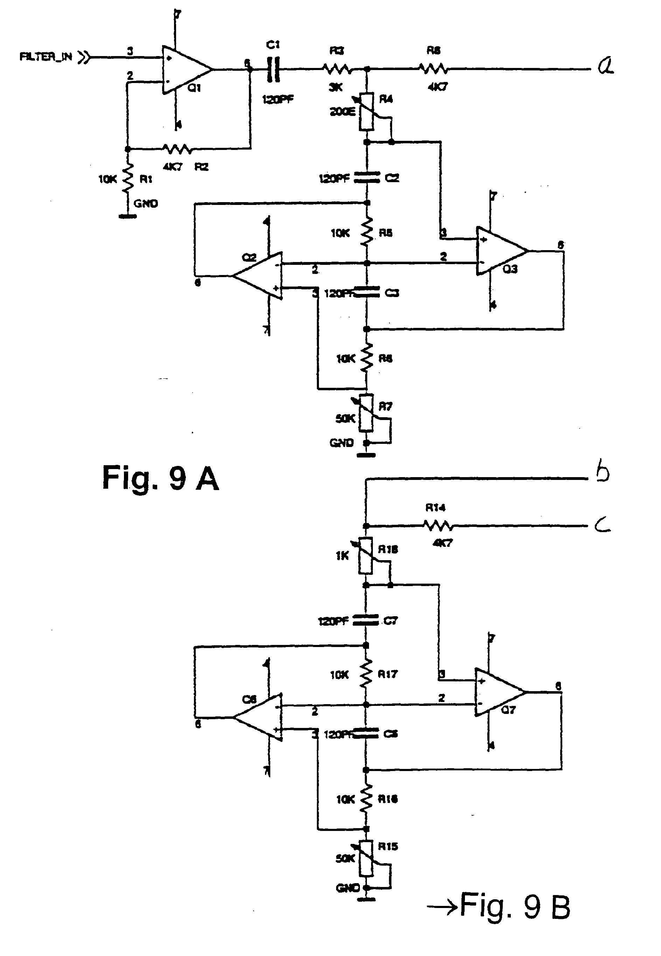

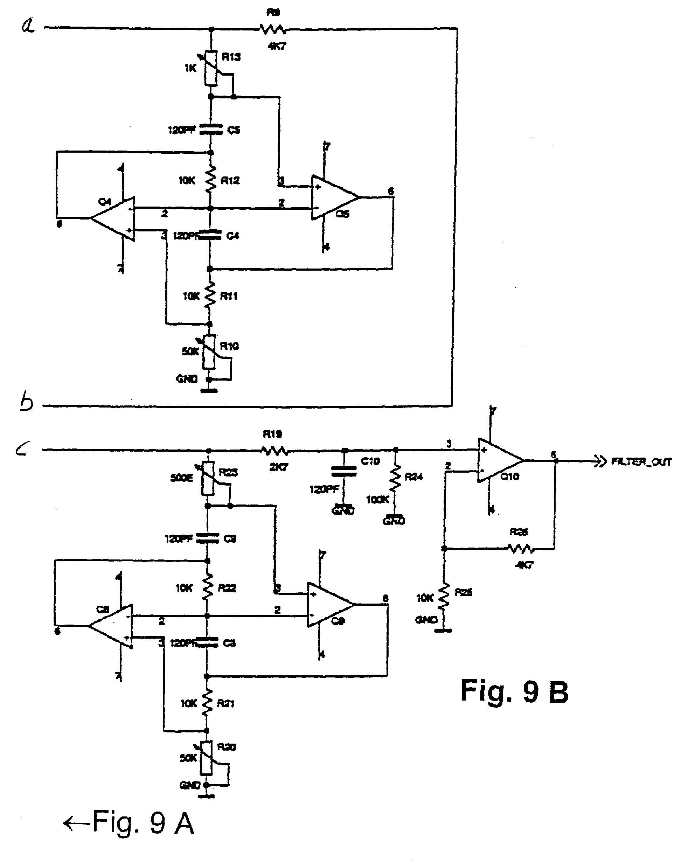

As can be seen from this formula, the demodulation, aside the wanted signal also produces a DC-component and the first harmonic of the carrier. Frequency spectra, in fact, also show higher harmonics. Modulated too, the harmonics occupy frequency ranges of considerable extent (Fig. 8). The side products of demodulation are eliminated, preferably by means of a band-pass filter as shown in Fig. 9.

The demodulation operation, which is phase sensitive, requires $E_o(t)$ to be properly phased so as to compensate the propagation delay introduced by the difference amplifier formed by the signal followers 36, 37 and the torroidal transformer T. Therefore, a phasing circuit 40 is provided.

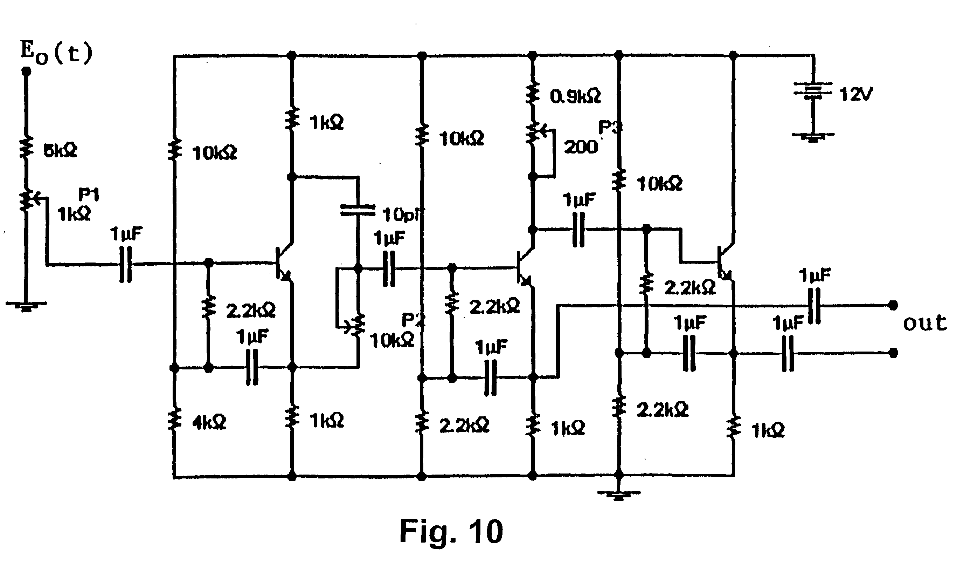

A possible implementation of the phasing circuit is represented in Fig. 10. It comprises three parts: P1, where an amplitude reduction is done, P2, where a phase control is carried out, and P3 for the equalization. The phasing circuit 40 has as input the reference carrier signal $E_o(t)$, and delivers as output a signal corresponding to $E_o(t)$, but in phase with the difference signal measured at the torroidal transformer T.

The phasing circuit 40 is in its simplest form, if a single carrier frequency can be adopted. Detection is hindered, furthermore, by the presence of the carrier and its harmonics in the demodulator output signal. Superimposed on the signal of interest, the carrier and the harmonics must be eliminated, anyhow, to allow particle counting and sizing of acceptable accuracy. That operation, like Fig. 8 suggests, is a critical and specific aspect of the present invention

Any filter, suited to the task, should preferably have as a minimum 60 dB of attenuation outside the signal pass-band. The frequency response, inside the pass band, should be essentially flat and the group-delay uniform, so as to minimize distortion. The cut-off should be sharp and the roll-off sufficiently steep to effectuate sufficient suppression of the carrier without affecting the pass-band. Such demands require a dedicated design like, for example, the one shown in Fig. 9. Particularly preferred are elliptical filters.

The filter of Fig. 9 is an elliptical filter which provides a combination of selective absorption and band-pass filtering. The required attenuation, outside the pass-band, is realized by the implementation of frequency dependent negative resistance, in gyrator circuits.

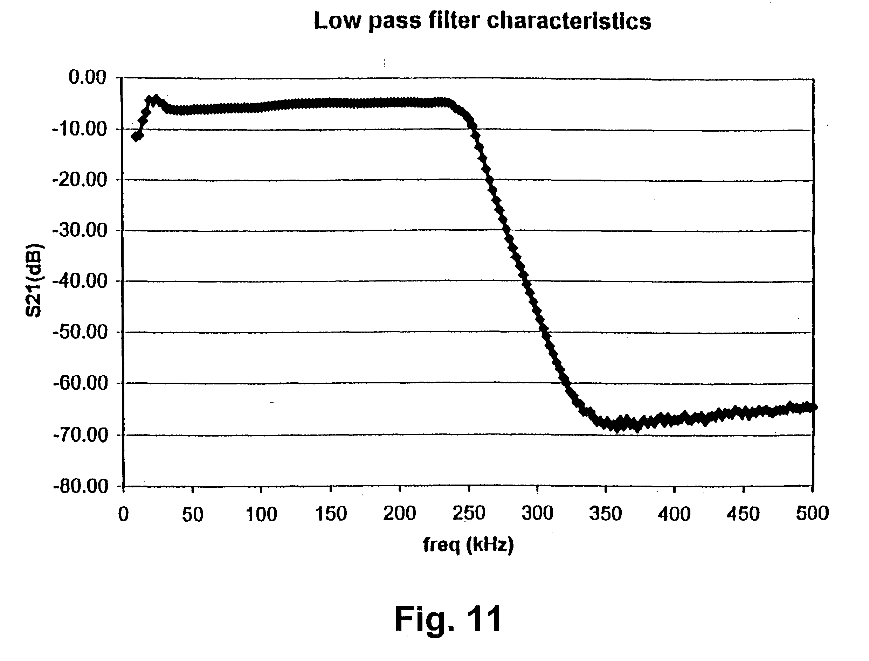

Full coverage of the stop-band necessitates the use of four gyrators, similar circuits actually made-up with the operational amplifier-pairs $Q_2$ and $Q_3$, $Q_4$ and $Q_5$, $Q_6$ and $Q_7$, $Q_8$ and $Q_9$. Tuned to discrete frequencies outside the pass-band, the gyrators fix the cut-off frequency and the roll-off of the filters' frequency response. The frequency response is shown in Fig. 11. Preferably, the ripple in the pass-band is less than 1dB, more preferably less than 0.5dB and most preferably 0.2 dB or less. The cut-off frequency is selectable in the range 150 to 450kHz in accordance with embodiments of the present invention, with a complete roll-off within 200kHz, more preferably within 150 kHz.

The circuit parameters are preferably optimized by computer simulation of the frequency response. The filter, with the components of Fig. 9, can be trimmed to the appropriate cut-off frequencies, as required for the use of 50 $\mu$m or 100 $\mu$m gates.

Of importance, for proper functioning of the detector according to the invention, is the selection of a suitable carrier frequency. The latter is subject to several restrictions, which depend, primarily, on the aperture of the gate 2 in use. The case of a 100 $\mu$m and a 50 $\mu$m gate are considered hereafter, as an illustrative example, but of course other apertures can be used as well.

### *100 $\mu$m gate*

With physiological saline passing, the gate resistance $R_g$, at operational frequencies, is found to be about 12 k$\Omega$. $R_2$, as a linearity requirement of the bridge response to variations of $R_g$, should be of that same order, and also $R_1$ and $R_v$ should preferably be of the same order. With the equivalent source resistance $R_e$ close to 6 k$\Omega$, and, with a load capacitance $C_e$ in the order of 20 pF, the detector appears to be bound to a low-pass cut-off frequency of about 2 MHz.

The detector's noise spectrum predicts relative noise-free functioning with carrier frequencies of 500 kHz or higher. The load capacitance $C_e$ however, with increasing frequency markedly degrades the sensitivity of detection.

More restrictions deal with signal distortion. When the transit time of 100 $\mu$m gates, in operational conditions, is about 10 $\mu$s, and the associated rise- and fall times of the gate signals are in the order of 2 $\mu$s, the fundamental frequency of the gate signal, in the order of 50 kHz, makes a bandwidth of 250 to 350 kHz ($5^{th}$ to $7^{th}$ harmonic) required, at any stage. Higher bandwidths appear impracticable for reasons of the proximity of the carrier frequency to the signal pass-band. Amplitude modulation, generating sidebands of that width, imposes a lower limit to practicable carrier frequencies. The latter are subject of compromise between background noise, signal loss and distortion. Carrier frequencies in the range of 500 to 600 kHz for such reasons appear good choice, in measurement with 100 $\mu$m gates in use.

### *50 $\mu$m gate*

The use of 50 $\mu$m gates, with internal resistance $R_g$ of about 32 k$\Omega$, demands bridge resistors $R_1$, $R_2$ and $R_v$ of nearly the same value. With $C_e$ unchanged, and $R_e$ increased to 16 k$\Omega$, the detectors' cut-off frequency is reduced to about 500 kHz, a factor four with respect to the case of a 100 $\mu$m gate in use.

The flow rate of the carrier liquid, lowered by that same factor, gives rise to gate transit times of about 40 $\mu$s and to fundamental signal frequencies in the order of 12.5 kHz. The signal pass-band, for such reasons, should be 62.5 to 87.5 kHz wide ($5^{th}$ to $7^{th}$ harmonic) as a minimum (bandwidth requirements are uniquely imposed by the flow rate of the carrier liquid), and the carrier frequency of about 200 kHz.

One important aspect of the present invention is that the active cell is included in a non-resonant circuit as the input to the AC common mode rejection device, e.g. in one arm of a Wheatstone bridge. The use of a resonant circuit which is conventional for AC cell counting and sizing devices has a negative effect on bandwidth particularly in the range of frequencies between 100 kHz and 1MHz and especially between 100 and 600 kHz in which the harmonics of the pulse generated by a particle going through the gate are of the same order as the carrier frequency. Typically the rise time of a pulse when a cell passes through a gate is of the order of 2 microseconds. To obtain a faithful detection of such a pulse suitable for quantitative measurements it is necessary to have a bandwidth of at least 166 kHz. Amplitude modulation, to take place without distortion requires twice this bandwidth, i.e. 322 kHz. This bandwidth must be available at the node D (Fig. 7) of the measuring bridge, for generation of the upper and lower sidebands. A resonant circuit with values typically required for cell counting and sizing does not achieve this bandwidth when the carrier frequency is in the range 100 kHz to 1MHz and especially in the range 100 to 600 kHz. Deficient bandwidth and the resulting distortion decrease the detection sensitivity and makes particle or cell sizing inaccurate. In comparison, the detection device in accordance with the present invention maintains bandwidth at a high level throughout the modulation, amplification and demodulation stages, e.g. by not using a resonant circuit as the input of the AC common mode rejection device.

It is to be understood that although specific constructions and configurations, as well as materials, have been discussed herein for devices according to the present invention, deviations can be made therein without departing from the spirit and scope of the present invention.

## Claims

1. A detection method for detecting objects in a liquid such as colloidal particles, cells, or the like, comprising the following steps:

   applying an AC signal, with a frequency in the range 100 kHz to 1MHz, more particularly in the range 100 to 600 kHz in parallel to an active cell with a gate and a device matched in impedance to the active cell, this AC signal generating a non-resonant electrical signal at an output of the active cell as well as at an output of the matched impedance device,
   sending at least one object to be measured through the gate of the active cell, this causing an electrical measurement pulse across the output of the active cell,
   modulating the non-resonant AC electrical signal at the output of the active cell, with the electrical measurement pulse,
   feeding the outputs from the cell and the matched impedance device to an AC common mode rejection device, thus generating a difference signal modulated with the non-resonant AC signal,
   demodulating the difference signal from the common mode rejection device, and
   filtering the demodulated signal to remove components of the AC signal and its harmonics to retrieve a signal relating to the volume of an object passing through the gate of the active cell.

2. The method according to claim 1, wherein the common mode rejection device is a Wheatstone bridge.

3. The method according to claim 1 or 2, wherein the filtering step is preferably done with an elliptical filter.

4. A detection device for detecting an object in a liquid such as colloidal particles or cells, comprising:

   an AC signal generator for generating an AC signal with a frequency between 100 kHz and 1 MHz, more preferably in the range 100 to 600 kHz;
   an active cell with a gate and a device matched in impedance to the active cell, the AC signal from the signal generator being applied to both cells in parallel to generate a non-resonant electrical signal at the output of the active cell and the matched impedance device;
   a modulator for modulating the signal applied to the active cell with a measurement pulse generated when an object passes through the gate of the active cell,
   an AC common mode rejection device, to which the outputs from the active cell and the matched impedance device are fed, generating a difference signal;
   a demodulator for demodulating the difference signal; and
   a filter for filtering the demodulated signal to remove components of the AC signal and its harmonics to retrieve a signal relating to the volume of an object passing through the gate of the active cell.

5. The device according to claim 4, wherein the matched impedance device comprises resistors and/or capacitors.

6.  The device according to claims 4 or 5, wherein the AC common mode rejection device is a Wheatstone bridge.

7.  The device according to claims 4 or 5, wherein that the common mode rejection device is a differential amplifier.

8.  The device according to any of claims 4 to 7 wherein the active cell comprises an AC guarding circuit.

9.  The device according to claim 8, wherein the AC guarding circuit comprises at least one guard electrode for preventing current leaking to ground from a signal electrode of the active cell.

10. The device according to claim 9, wherein the guard electrode and the signal electrode are kept at the same potential and phase.

11. The device according to any of claims 4 to 10, wherein the filter is an elliptical filter.

Fig. 1

**Fig. 2**

Fig. 3

Fig. 4

low-pass filter

high-pass filter

AD521 pre-amp

V+

V−

J

Pt-2

Pt-1

2

22

30

28

6

34

8

33

4

4

Fig. 5 B

Fig. 5 A

# Fig. 6

EP 1 162 449 A1

**Fig. 7**

Fig. 8

Fig. 9 A

→Fig. 9 B

Fig. 9 B

←Fig. 9 A

Fig. 10

EP 1 162 449 A1

Fig. 11

EP 1 162 449 A1

**European Patent Office**

## EUROPEAN SEARCH REPORT

Application Number

EP 00 20 1979

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | WO 88 03267 A (COULTER ELECTRONICS) 5 May 1988 (1988-05-05) * the whole document * | 1-11 | G01N15/12 |
| E | WO 00 52450 A (COULTER INT CORP) 8 September 2000 (2000-09-08) * page 8, line 15 - page 24, line 25; figure 9 * | 1-11 | |
| A | EP 0 398 719 A (ALCAN INT LTD) 22 November 1990 (1990-11-22) * the whole document * | 1-11 | |

| | | | TECHNICAL FIELDS SEARCHED (Int.Cl.7) |
|---|---|---|---|
| | | | G01N |

The present search report has been drawn up for all claims

| Place of search | Date of completion of the search | Examiner |
|---|---|---|
| MUNICH | 6 November 2000 | Müller, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

EP 1 162 449 A1

## ANNEX TO THE EUROPEAN SEARCH REPORT
## ON EUROPEAN PATENT APPLICATION NO.

EP 00 20 1979

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2000

| Patent document cited in search report | | Publication date | Patent family member(s) | | Publication date |
|---|---|---|---|---|---|
| WO 8803267 | A | 05-05-1988 | US | 4791355 A | 13-12-1988 |
| | | | AU | 592688 B | 18-01-1990 |
| | | | AU | 8278087 A | 25-05-1988 |
| | | | BR | 8707505 A | 21-02-1989 |
| | | | CA | 1273059 A | 21-08-1990 |
| | | | CN | 87106976 A,B | 29-06-1988 |
| | | | DE | 3788723 D | 17-02-1994 |
| | | | DE | 3788723 T | 01-06-1994 |
| | | | DE | 292523 T | 05-10-1989 |
| | | | EP | 0292523 A | 30-11-1988 |
| | | | ES | 2007736 A | 01-07-1989 |
| | | | IL | 84180 A | 15-04-1991 |
| | | | JP | 1501017 T | 06-04-1989 |
| | | | JP | 5006135 B | 25-01-1993 |
| | | | KR | 9104144 B | 22-06-1991 |
| | | | NZ | 222222 A | 28-08-1990 |
| WO 0052450 | A | 08-09-2000 | NONE | | |
| EP 0398719 | A | 22-11-1990 | CA | 1328679 A | 19-04-1994 |
| | | | AT | 125042 T | 15-07-1995 |
| | | | AU | 630959 B | 12-11-1992 |
| | | | AU | 5617390 A | 29-11-1990 |
| | | | DE | 69020800 D | 17-08-1995 |
| | | | DE | 69020800 T | 07-12-1995 |
| | | | DE | 398719 T | 13-06-1991 |
| | | | ES | 2075156 T | 01-10-1995 |
| | | | JP | 2966475 B | 25-10-1999 |
| | | | JP | 3142348 A | 18-06-1991 |
| | | | KR | 162490 B | 01-05-1999 |
| | | | US | 5130639 A | 14-07-1992 |
| | | | ZA | 9003812 A | 27-03-1991 |

EPO FORM P0459

For more details about this annex : see Official Journal of the European Patent Office, No. 12/82

24